# EUROPÄISCHE PATENTSCHRIFT

(11) **EP 2 095 041 B1**
(45) Veröffentlichungstag und Bekanntmachung des Hinweises auf die Patenterteilung: **02.01.2019**
(21) Anmeldenummer: 07819826.4
(22) Anmeldetag: 15.11.2007
(51) Int. Cl.: F25B 21/00, F25B 47/02

(54) **KÜHL- UND/ODER GEFRIERGERÄT**
REFRIGERATOR AND/OR FREEZER
APPAREIL DE RÉFRIGÉRATION ET/OU DE CONGÉLATION

(30) Priorität: 01.12.2006 DE 202006018266 U; 09.03.2007 DE 202007003577 U
(43) Veröffentlichungstag der Anmeldung: 02.09.2009
(73) Patentinhaber: Liebherr-Hausgeräte Ochsenhausen GmbH, 88416 Ochsenhausen (DE)
(72) Erfinder: WIEST, Matthias, 88416 Hattenburg 33 (DE); SIEGEL, Didier, 88416 Steinhausen (DE)
(74) Vertreter: Herrmann, Uwe
(86) Internationale Anmeldenummer: PCT/EP2007/009885
(87) Internationale Veröffentlichungsnummer: WO 2008/064776

(56) Entgegenhaltungen:
- WO-A-01/33145
- WO-A-2005/103585
- ES-A1- 2 154 564
- GB-A- 742 995
- JP-A- 2006 308 197
- US-A- 6 094 925
- US-A1- 2005 047 284

## Beschreibung

Die Erfindung betrifft ein Kühl- und/oder Gefriergerät mit einem magnetischen Kühler, mit einem kalten Wärmetauscher zur Kühlung des Kühl- und/oder Gefrierraums des Gerätes sowie mit Steuermitteln, wobei die Steuermittel derart ausgeführt sind, dass in dem Kühlmodus des Gerätes das in dem magnetischen Kühler gekühlte Wärmeträgermedium dem kalten Wärmetauscher zugeführt wird. Ein derartiger Kühler ist in der Patentschrift WO2005/103585 A1 offenbart. Bei der magnetischen Kühlung wird unter Nutzung des sogenannten magnetokalorischen Effektes ein Wärmeträgermedium zeitlich versetzt erwärmt und abgekühlt, wobei üblicherweise vier Prozeßschritte, nämlich die Magnetisierung, der Wärmeentzug, die Entmagnetisierung und die Kältenutzung kontinuierlich wiederholt werden. Bekannt ist es beispielsweise, ein feststehendes magnetokalorisches Material und rotierende Magnete einzusetzen, wobei das magnetokalorische Material je nach Position des rotierenden Magnetes aufgrund von Magnetisierung eine Erwärmung oder aufgrund von Entmagnetisierung eine Abkühlung erfährt, die letztlich zur Erwärmung oder Abkühlung eines Wärmeträgermediums herangezogen wird.

Ein denkbarer Kältekreislauf umfasst einen kalten Wärmetauscher, den magnetischen Kühler, einen warmen Wärmetauscher und eine Pumpe zur Förderung des Wärmeträgermediums. Während der Magnetisierung wird das durch den magnetischen Kühler strömende Wärmeträgermedium erwärmt und sodann mittels der genannten Pumpe in den warmen Wärmetauscher geführt, in dem es abgekühlt wird. Während der Entmagnetisierung wird das durch den magnetischen Kühler strömende Wärmeträgermedium sodann weiter abgekühlt und durchströmt anschließend den kalten Wärmetauscher, der sich üblicherweise in dem Kühl- bzw. dem Gefrierraum bzw. in dessen Bereich befindet und zur Aufnahme von Wärme aus diesem Raum dient. Das auf diese Weise im kalten Wärmetauscher erwärmte Wärmeträgermedium wird sodann während der Magnetisierung in dem magnetischen Kühler weiter erwärmt und gelangt anschließend wieder über die Pumpe zu dem warmen Wärmetauscher.

Während des Betriebes kann es dazu kommen, dass der kalte Wärmetauscher vereist, so dass dieser abgetaut werden muss. Die Abtauung erfolgt üblicherweise solange, bis ein bestimmter Temperaturwert überschritten wird, anschließend wird der Kühlkreislauf wie oben beschrieben wieder in Betrieb genommen und es erfolgt eine Kühlung des Kühl- bzw. Gefrierraums mittels des von dem kalten Wärmeträgermedium durchströmten kalten Wärmetauschers.

Der vorliegenden Erfindung liegt die Aufgabe zugrunde, ein Kühl- und/oder Gefriergerät der eingangs genannten Art dahingehend weiterzubilden, dass die Abtaudauer reduziert wird.

Diese Aufgabe wird durch ein Kühl- und/oder Gefriergerät mit den Merkmalen des Anspruchs 1 gelöst. Danach ist vorgesehen, dass die Steuermittel des weiteren derart ausgeführt sind, dass in dem Abtaumodus des Gerätes das in dem magnetischen Kühler erwärmte Wärmeträgermedium dem kalten Wärmetauscher zugeführt wird. Abweichend von dem Kühlbetrieb, in dem dem kalten Wärmetauscher das in dem magnetischen Kühler gekühlte Wärmeträgermedium zugeführt wird, ist in dem Abtaumodus nun vorgesehen, dass das in dem magnetischen Kühler erwärmte Wärmeträgermedium dem kalten Wärmetauscher zugeführt wird, wodurch sich dessen Temperatur schneller erhöht und die Abtaudauer dementsprechend reduziert wird. Eine Veränderung einer etwaigen Ventilschaltung ist dabei nicht erforderlich.
Vorzugsweise umfassen die Steuermittel in Strömungsrichtung stromabwärts des kalten Wärmetauschers und stromaufwärts des magnetischen Kühlers angeordnete Ventile sowie eine Ventilsteuerung, mittels derer die Ventile ansteuerbar sind. Bei den Ventilen kann es sich beispielsweise um bistabile oder monostabile Ventile handeln.
Die Ventile werden in dieser Ausgestaltung der Erfindung derart eingesetzt, dass sie in dem Kühlmodus das Wärmeträgermedium derart führen, dass in dem magnetischen Kühler abgekühltes Wärmeträgermedium dem kalten Wärmetauscher und in dem magnetischen Kühler erwärmtes Wärmeträgermedium dem warmen Wärmetauscher zugeführt wird. Die Steuermittel sind erfindungsgemäß derart ausgeführt, dass nun in dem Abtaumodus eine Kreislaufumkehr stattfindet, die darin besteht, dass während des Abtauens die Ventile das in dem magnetischen Kühler erwärmte Wärmeträgermedium dem kalten Wärmetauscher und dass in dem magnetischen Kühler gekühlte Wärmeträgermedium dem warmen Wärmetauscher zuführen.
Dementsprechend kann in einer weiteren Ausgestaltung ein warmer Wärmetauscher vorgesehen sein, wobei eines der Ventile zwischen dem warmen Wärmetauscher und dem magnetischen Kühler angeordnet sein kann.
Der magnetische Kühler kann zwei oder mehr als zwei Wärmetauschereinheiten umfassen, die derart ausgeführt sind, dass in diesen periodisch eine Erwärmung und Abkühlung des diese durchströmenden Wärmeträgermediums erfolgt.

Denkbar ist, dass die Wärmetauschereinheiten des magnetischen Kühlers aus einem Material bestehen oder ein Material aufweisen, das sich bei der Magnetisierung erwärmt und bei der Entmagnetisierung abkühlt, und dass der magnetische Kühler des weiteren einen relativ zu den Wärmetauschereinheiten bewegten, vorzugsweise rotierenden Magneten aufweist. Je nach Position des rotierenden Magneten erfolgt in einer der Wärmetauschereinheiten eine Erwärmung des magnetokalorischen Materials. Dies führt dazu, dass das diese Wärmetauschereinheit durchströmende Wärmeträgermedium erwärmt wird. Die andere Wärmetauschereinheit, in der sich der rotierende Magnet nicht befindet, das heißt die entmagnetisiert wird, erfährt aufgrund des magnetokalorischen Effektes eine Abkühlung, was zur Folge hat, dass das Wärmeträgermedium, das diese Wärmetauschereinheit durchströmt, abgekühlt wird.

Alternativ zu einer derartigen Ausführung mit einem rotieren Magneten ist grundsätzlich ebenso denkbar, dass das magnetokalorische Material rotiert und der Magnet feststeht oder auch dass das magnetokalorische Material in dem Wärmeträgermedium beispielsweise in Form einer Suspension aufgenommen ist.

In weiterer Ausgestaltung der Erfindung ist schließlich vorgesehen, dass die Steuermittel derart ausgeführt sind, dass die Umschaltung von dem Kühlmodus auf den Abtaumodus durch einen zeitlichen Versatz in der Ansteuerung der Ventile oder in dem Betrieb des magnetischen Kühlers erfolgt. Denkbar ist es somit, beim Umschalten von dem Kühlmodus auf den Abtaumodus oder auch bei dem Umschalten von dem Abtaumodus auf den Kühlmodus den magnetischen Kühler unverändert weiterzubetreiben und die Strömungsführung des Wärmeträgermediums nur durch einen zeitlichen Versatz der Ventilsteuerung zu ändern. Dieser zeitliche Versatz ist derart ausgestaltet, dass das stromaufwärts des magnetischen Kühlers befindliche Ventil das Wärmeträgermedium der Wärmetauschereinheit zuführt, in der eine Erwärmung des Wärmeträgermediums stattfindet und dieses sodann dem kalten Wärmetauscher zuführt. Weiter kann vorgesehen sein, dass das stromabwärts des kalten Wärmetauschers angeordnete Ventil das in dem kalten Wärmetauscher geringfügig erwärmte Wärmeträgermedium der Wärmetauschereinheit des magnetischen Kühlers zuführt, in der eine Abkühlung des Wärmeträgermediums stattfindet.

Ebenso ist es denkbar, die Ventile unverändert weiterzubetreiben und einen zeitlichen Versatz im Betrieb des magnetischen Kühlers zu bewirken.

Sobald die Abtauung abgeschlossen ist, erfolgt ein erneuter zeitlicher Versatz der Ventile oder des magnetischen Kühlers derart, dass das Wärmeträgermedium zunächst der kalten Wärmetauschereinheit des magnetischen Kühlers zugeführt wird und von dort aus in den kalten Wärmetauscher strömt und dass das den kalten Wärmetauscher verlassende Wärmeträgermedium der warmen Wärmetauschereinheit des magnetischen Kühlers zugeführt wird und von dort aus erneut in den warmen Wärmetauscher strömt.

Auch ist es möglich, das Abtauen durch eine Umkehr der Förderrichtung des Wärmeträgermediums zu erreichen. Dabei kann der magnetische Kühler weiterlaufen. Entsprechendes gilt für die Verschaltung der Ventile.

Unter dem Begriff der "Umkehr der Förderrichtung" ist zu verstehen, dass das Wärmeträgermedium das System in zum Kühlmodus umgekehrter Richtung durchströmt. Dies kann durch eine Umkehr der Förderrichtung der Pumpe oder dadurch erreicht werden, dass die Förderrichtung der Pumpe unverändert bleibt und die Förderrichtung des Wärmeträgermediums durch eine geänderte Leitungsverschaltung vorgenommen wird.

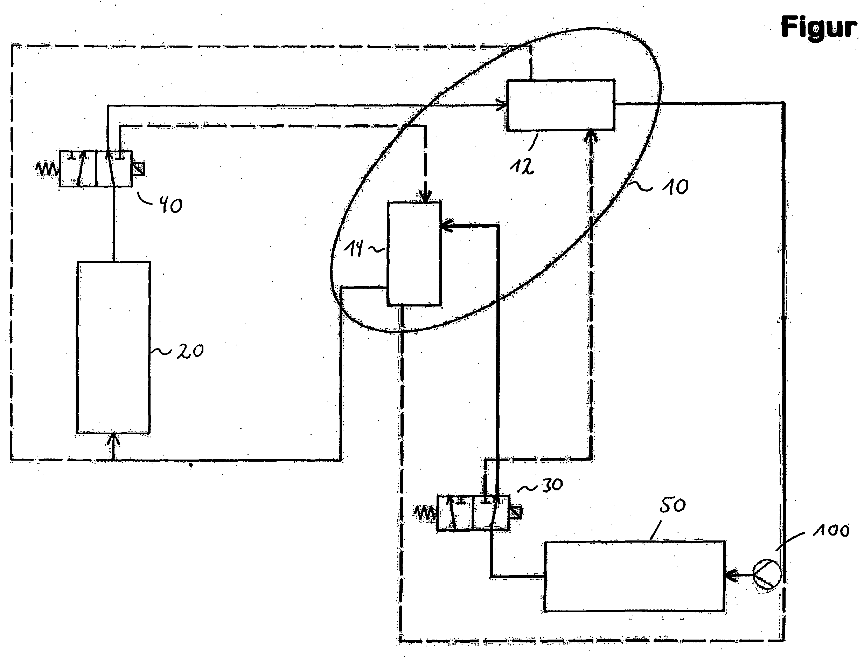

Weitere Einzelheiten der Erfindung werden anhand eines in der Zeichnung dargestellten Ausführungsbeispiels erläutert.

Mit dem Bezugszeichen 10 ist der magnetische Kühler gekennzeichnet, der zwei Wärmetauschereinheiten 12, 14 umfasst, die als bauliche Einheit oder auch voneinander getrennt ausgeführt sein können. Diese Wärmetauschereinheiten bestehen aus einem magnetokalorischen Material oder weisen ein solches Material auf. Die zyklische Magnetisierung und Entmagnetisierung wird durch einen nicht dargestellten rotierenden Magneten vorgenommen, der um die Wärmetauschereinheiten 12, 14 rotiert. Je nach Position des rotierenden Magneten werden die Wärmetauschereinheiten 12, 14 magnetisiert oder entmagnetisiert, was deren Erwärmung oder Abkühlung zur Folge hat. Dementsprechend erfährt das Wärmeträgermedium, das durch die erwärmte Wärmetauschereinheit geführt wird eine Erwärmung und das Wärmeträgermedium, das durch die abgekühlte Wärmetauschereinheit geführt wird, eine Abkühlung.

Wie dies weiter aus der Figur hervorgeht, umfasst das Kühl- und/oder Gefriergerät des weiteren einen kalten Wärmetauscher 20, der im oder im Bereich des Kühl- bzw. Gefrierraums angeordnet ist und für dessen Kühlung sorgt. Ein warmer Wärmetauscher ist auf der Außenseite des Gerätes angeordnet und dient zur Wärmeabfuhr aus dem Wärmeträgermedium in die Umgebung bzw. an ein anderes Wärmeträgermedium.

Die Pumpe 100 sorgt für die Durchströmung des dargestellten Kühlkreislaufes mit dem Wärmeträgermedium.

Wie dies weiter aus der Figur hervorgeht, ist stromabwärts des kalten Wärmetauschers 20 ein Ventil 40 angeordnet, und stromabwärts des warmen Wärmetauschers 50 ein weiteres Ventil 30 angeordnet. Bei den Ventilen handelt es sich um bistabile oder monostabile Ventile.

Während des Kühlvorgangs wird das Ventil 40 mittels einer nicht dargestellten Ventilsteuerung so angesteuert, dass der Wärmeträger, beispielsweise Sole oder ein Alkoholgemisch, durch die Wärmetauschereinheit 12/14 strömt, die sich im magnetisierten Zustand befindet und daher erwärmt ist und somit Wärme an das Wärmeträgermedium abgibt. Der auf diese Weise erwärmte Wärmeträger wird sodann mittels der Pumpe 100 zu dem warmen Wärmetauscher 50 außerhalb des Kühlgerätes geleitet. Das Ventil 30 wird derart angesteuert, dass das in dem warmen Wärmetauscher 50 abgekühlte Wärmeträgermedium durch die Wärmetauschereinheit 12/14 des magnetischen Kühlers geführt wird, die sich im entmagnetisierten Zustand befindet und daher gekühlt ist. Auf diese Weise wird das Wärmeträgermedium in der Wärmetauschereinheit 12/14 gekühlt und gelangt sodann in den kalten Wärmetauscher 20.

Zum Zwecke des Abtauens wird die Ventilsteuerung bei unverändertem Betrieb des magnetischen Kühlers 10 derart geändert, dass gegenüber dem Betrieb des magnetischen Kühlers 10 ein Zeitversatz, d. h. eine Phasenverschiebung erfolgt. Das Ventil 40 wird derart zeitversetzt angesteuert, das Wärmeträgermedium nach Durchströmen des kalten Wärmetauschers 20 durch die kalte, das heißt entmagnetisierte Wärmetauschereinheit 12/14 des magnetischen Kühlers geführt wird und das Ventil 30 wird derart angesteuert, dass das den warmen Wärmetauscher 50 verlassende Wärmeträgermedium durch die warme, das heißt magnetisierte Wärmetauschereinheit des magnetischen Kühlers 10 geführt wird. Auf diese Weise wird eine Kreislaufumkehr dahingehend erreicht, dass der kalte Wärmetauscher von Wärmeträgermedium durchströmt wird, das in dem magnetischen Kühler 10 eine Erwärmung erfahren hat, was zur Folge hat, dass die Abtaudauer des kalten Wärmetauschers entsprechend verringert werden kann.

Dadurch ergibt sich der Vorteil, dass die Temperaturen im Kühlgerät stabiler sind bzw. weniger schwanken.

## Patentansprüche

1. Kühl- und/oder Gefriergerät mit einem magnetischen Kühler (10), mit einem kalten Wärmetauscher (20) zur Kühlung des Kühl- und/oder Gefrierraums des Gerätes, sowie mit Steuermitteln, wobei die Steuermittel derart ausgeführt sind, dass in dem Kühlmodus des Gerätes das in dem magnetischen Kühler (10) gekühlte Wärmeträgermedium dem kalten Wärmetauscher (20) zugeführt wird, **dadurch gekennzeichnet, dass** die Steuermittel des Weiteren derart ausgeführt sind, dass in dem Abtaumodus des Gerätes das in dem magnetischen Kühler (10) erwärmte Wärmeträgermedium dem kalten Wärmetauscher (20) zugeführt wird.

2. Kühl- und/oder Gefriergerät nach Anspruch 1, **dadurch gekennzeichnet, dass** die Steuermittel in Strömungsrichtung des Wärmeträgermediums stromabwärts des kalten Wärmetauschers (20) und stromaufwärts des magnetischen Kühlers (10) angeordnete Ventile (30, 40) sowie eine Ventilsteuerung umfassen.

3. Kühl- und/oder Gefriergerät nach Anspruch 2, **dadurch gekennzeichnet, dass** das Gerät ferner einen warmen Wärmetauscher (50) aufweist und dass eines der Ventile (30) zwischen dem warmen Wärmetauscher (50) und dem magnetischen Kühler (10) angeordnet ist.

4. Kühl- und/oder Gefriergerät nach einem der vorhergehenden Ansprüche, **dadurch gekennzeichnet, dass** der magnetische Kühler (10) zwei oder mehr als zwei Wärmetauschereinheiten (12, 14) umfaßt, die derart ausgeführt sind, dass in diesen zyklisch eine Erwärmung und Abkühlung des diese durchströmenden Wärmeträgermediums erfolgt.

5. Kühl- und/oder Gefriergerät nach einem der vorhergehenden Ansprüche, **dadurch gekennzeichnet, dass** die Wärmetauschereinheiten (12, 14) aus magnetokalorischem Material bestehen oder ein solches Material aufweisen und dass der magnetische Kühler (10) des Weiteren einen relativ zu den Wärmetauschereinheiten (12, 14) bewegten, vorzugsweise rotierenden Magneten aufweist.

6. Kühl- und/oder Gefriergerät nach einem der vorhergehenden Ansprüche, **dadurch gekennzeichnet, dass** die Steuermittel derart ausgeführt sind, dass die Umschaltung von dem Kühlmodus auf den Abtaumodus durch einen zeitlichen Versatz in der Ansteuerung der Ventile (30, 40) oder durch einen zeitlichen Versatz des Betriebes des magnetischen Kühlers (10) oder durch eine Umkehr der Förderrichtung des Wärmeträgermediums erfolgt.

## Claims

1. A refrigerator unit and/or a freezer unit having a magnetic refrigerator (10), having a cold heat exchanger (20) for the refrigeration of the refrigerator space and/or freezer space of the unit as well as having control means, wherein the control means are made such that, in the refrigerating mode of the unit, the heat carrier medium refrigerated in the magnetic refrigerator (10) is supplied to the cold heat exchanger (20), **characterized in that** the control means are furthermore made such that the heat carrier medium heated in the magnetic refrigerator (10) is supplied to the cold heat exchanger (20) in the defrosting mode of the unit.

2. A refrigerator unit and/or a freezer unit in accordance with claim 1, **characterized in that** the control means include valves (30, 40) arranged downstream of the cold heat exchanger (20) and upstream of the magnetic refrigerator (10) in the flow direction of the heat carrier medium as well as a valve control.

3. A refrigerator unit and/or a freezer unit in accordance with claim 2, **characterized in that** the unit furthermore has a hot heat exchanger (50); and **in that** one of the valves (30) is arranged between the hot heat exchanger (50) and the magnetic refrigerator (10).

4. A refrigerator unit and/or a freezer unit in accordance with one of the preceding claims, **characterized in that** the magnetic refrigerator (10) includes two or more than two heat exchanger units (12, 14) which are made such that a heating and cooling of the heat carrier medium flowing through them takes place cyclically in them.

5. A refrigerator unit and/or a freezer unit in accordance with one of the preceding claims, **characterized in that** the heat exchanger units (12, 14) consist of a magnetocaloric material or comprise such a material; and **in that** the magnetic refrigerator (10) furthermore has a magnet moved, preferably rotating, relative to the heat exchanger units (12, 14).

6. A refrigerator unit and/or a freezer unit in accordance with one of the preceding claims, **characterized in that** the control means are made such that the changeover from the refrigerating mode to the defrosting mode takes place by a time offset in the control of the valves (30, 40) or by a time offset of the operation of the magnetic refrigerator (10) or by a reversal of the conveying direction of the heat carrier medium.

## Revendications

1. Appareil de réfrigération et/ou de congélation comprenant un réfrigérant magnétique (10), un échangeur de chaleur froid (20) destiné au refroidissement du compartiment de réfrigération et/ou de congélation de l'appareil, ainsi que des moyens de commande, les moyens de commande étant réalisés de telle manière que, dans le mode de réfrigération de l'appareil, le fluide caloporteur refroidi dans le réfrigérant magnétique (10) est alimenté dans l'échangeur de chaleur froid (20), **caractérisé en ce que** les moyens de commande sont en outre réalisés de telle manière que, dans le mode de dégivrage de l'appareil, le fluide caloporteur réchauffé dans le réfrigérant magnétique (10) est alimenté dans l'échangeur de chaleur froid (20).

2. Appareil de réfrigération et/ou de congélation selon la revendication 1, **caractérisé en ce que** les moyens de commande comprennent des vannes (30, 40) disposées, dans le sens d'écoulement du fluide caloporteur, en aval de l'échangeur de chaleur froid (20) et en amont du réfrigérant magnétique (10) ainsi qu'une commande de vannes.

3. Appareil de réfrigération et/ou de congélation selon la revendication 2, **caractérisé en ce que** l'appareil comporte en outre un échangeur de chaleur chaud (50) et **en ce qu'**une des vannes (30) est disposée entre l'échangeur de chaleur chaud (50) et le réfrigérant magnétique (10).

4. Appareil de réfrigération et/ou de congélation selon l'une des revendications précédentes, **caractérisé en ce que** le réfrigérant magnétique (10) comprend deux unités d'échange de chaleur (12, 14) ou plus, qui sont réalisées de telle manière qu'un échauffement et un refroidissement du fluide caloporteur y circulant ont lieu dans celles-ci de manière cyclique.

5. Appareil de réfrigération et/ou de congélation selon l'une des revendications précédentes, **caractérisé en ce que** les unités d'échange de chaleur (12, 14) se composent de matériau magnétocalorique ou comportent un matériau de ce type et **en ce que** le réfrigérant magnétique (10) comporte en outre un aimant mobile, de préférence rotatif, par rapport aux unités d'échange de chaleur (12, 14).

6. Appareil de réfrigération et/ou de congélation selon l'une des revendications précédentes, **caractérisé en ce que** les moyens de commande sont réalisés de telle manière que le passage du mode de réfrigération au mode de dégivrage est effectué par un décalage temporel dans la commande des vannes (30, 40) ou par un décalage temporel du fonctionnement du réfrigérant magnétique (10) ou par une inversion du sens de transport du fluide caloporteur.
